Europäisches Patentamt

(19) European Patent Office

Office européen des brevets

(11) Numéro de publication : **0 298 789 B1**

(12) **FASCICULE DE BREVET EUROPEEN**

(45) Date de publication du fascicule du brevet :
02.10.91 Bulletin 91/40

(51) Int. Cl.⁵ : **B01D 33/04, B01D 35/14**

(21) Numéro de dépôt : **88401377.2**

(22) Date de dépôt : **07.06.88**

(54) **Appareil destiné à la détection d'un fluage de boues en cours de déshydratation sur un filtre à bandes presseuses.**

(30) Priorité : **17.06.87 FR 8708465**

(43) Date de publication de la demande :
**11.01.89 Bulletin 89/02**

(45) Mention de la délivrance du brevet :
**02.10.91 Bulletin 91/40**

(84) Etats contractants désignés :
**BE CH DE ES IT LI**

(56) Documents cités :
**DE-A- 1 907 356**
**FR-A- 1 536 748**
**FR-A- 2 280 416**
**US-A- 4 081 374**

(73) Titulaire : **"DEGREMONT" Société dite:**
**183, Avenue du 18 Juin 1940**
**F-92508 Rueil-Malmaison Cédex (FR)**

(72) Inventeur : **Cornice, Robert**
**23 bis, rue de Paris**
**F-95460 Ezanville (FR)**
Inventeur : **Bele, Patrick**
**1, rue Antonio Vivaldi**
**F-78100 Saint Germain en Laye (FR)**

(74) Mandataire : **Armengaud, Charles**
**Cabinet ARMENGAUD AINE 3, Avenue
Bugeaud**
**F-75116 Paris (FR)**

Jouve, 18, rue Saint-Denis, 75001 PARIS

## Description

La présente invention concerne un appareil permettant de détecter automatiquement un éventuel fluage de boues en cours de déshydratation sur un filtre à bandes presseuses.

Le principe du filtre à bandes presseuses consiste à faire passer un gâteau de boues, préalablement égoutté gravitairement dans une zone de drainage, entre deux toiles filtrantes, la pression étant exercée par serrage de ces deux toiles lors de leur passage sur un ou plusieurs rouleaux ou tambours, sur lesquels elles s'enroulent plus ou moins.

Les performances des filtres à bandes sont limitées par un certain nombre de facteurs, et en particulier par le fluage latéral du gâteau de boues, pris en sandwich entre les bandes filtrantes dans la zone où s'exerce la pression. Ce fluage est dû au manque de texture des boues à déshydrater, en particulier des boues contenant de fortes proportions de matières biologiques organiques et peu de matières fibreuses, comme c'est le cas le plus courant pour les boues de stations d'épuration d'eaux résiduaires urbaines.

Tel est également le cas des boues minérales, ne contenant pratiquement pas de support fibreux, telles que les boues d'hydroxydes, en particulier les boues provenant du traitement de l'eau en vue de la rendre potable, ou certaines boues provenant du traitement d'effluents d'industries agro-alimentaires, telles que laiteries ou autres.

Par ailleurs, ces phénomènes de fluage ne sont pas toujours détectés dès qu'ils se produisent sur les filtres à bandes, et l'on risque — ce qui arrive très souvent — d'avoir des accumulations importantes de boues dans la fosse de réception des filtrats avant qu'il ne soit possible de s'apercevoir du phénomène et d'y porter remède, ce qui conduit rapidement à une baisse du rendement de l'appareil.

L'appareil suivant l'invention permet de mettre rapidement en évidence un fluage latéral, et, soit simplement par une alarme, avec éventuellement arrêt automatique du filtre, soit par couplage avec un automate programmable, associé éventuellement à d'autres moyens de détection d'incidents de fonctionnement, de parvenir à une automatisation complète du fontionnement du filtre. Par là même, l'appareil autorise une diminution de la surveillance du filtre en fonctionnement, donc du coût de main-d'oeuvre, qui est l'un des postes les plus importants, sinon le plus important, du coût d'exploitation global de la déshydratation des boues sur filtres à bandes presseuses.

L'appareil suivant l'invention pour la détection automatique du fluage de boues en cours de déshydratation sur filtres à bandes presseuses est caractérisé en ce qu'il consiste en une bascule placée sous les bandes, dont l'un des leviers comporte un plateau destiné à recevoir la boue, l'autre levier comportant des moyens destinés, lors d'une surcharge du plateau récepteur entraînant un basculement du système, à déclencher un signal d'alerte ou d'arrêt du filtre.

Suivant une caractéristique de l'invention, le plateau récepteur présente une largeur telle qu'une fois en position sous les bandes, il puisse recueillir la boue fluant par l'un des côtés des bandes.

Suivant une autre caractéristique de l'invention, le plateau récepteur, dont les bords sont relevés, est incliné pour assurer l'écoulement du filtrat tombé sur le plateau.

Suivant encore une autre caractéristique de l'invention, le levier antagoniste au levier portant le plateau récepteur est taré au moyen d'une ou plusieurs masses, de position variable sur le levier.

Enfin, toujours suivant une caractéristique de l'invention, le plateau récepteur est lavé automatiquement après chaque basculement, afin d'être débarrassé des boues qui s'y trouvent, et ainsi permettre à l'ensemble de revenir à son état d'équilibre, en vue de la détection d'un nouveau fluage.

Les moyens utilisés, lors du basculement du système sous l'action de la surchage provoquée par l'excès de boue fluée sur le plateau récepteur, pour le déclenchement d'un signal donnant l'alerte ou influant sur la marche du filtre, consistent soit en un détecteur de proximité magnétique, soit en des butées électromagnétiques de fin de course ou des cellules photo-électriques, tous autres moyens pouvant également être utilisés.

On a décrit ci-après, à titre d'exemple non limitatif, une forme de réalisation possible de l'invention, cette description étant faite en référence aux dessins annexés, sur lesquels :

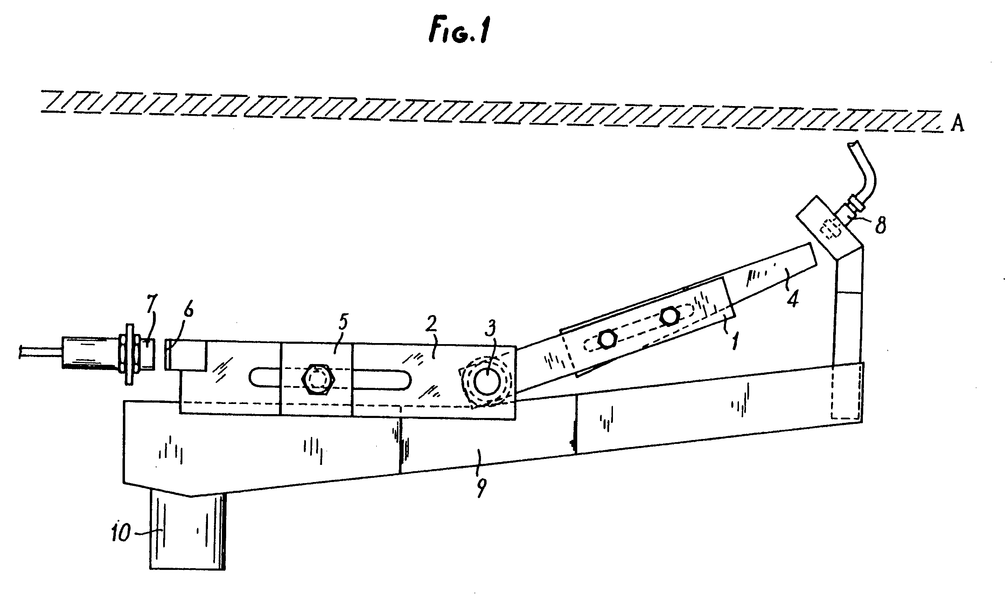

— la Figure 1 est une vue en élévation de l'appareil ;

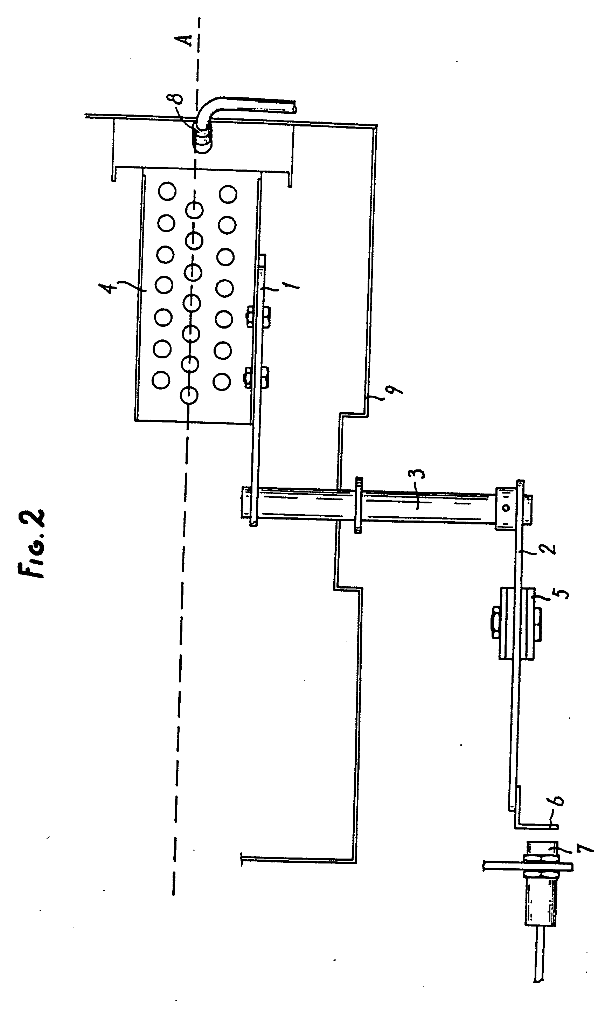

— la Figure 2 est une vue en plan, par-dessus, de cet appareil.

Conformément à l'invention, l'appareil, placé à l'endroit choisi du filtre, dont on a représenté schématiquement, en A, les bandes filtrantes, est constitué par une bascule à deux leviers 1 et 2 solidaires d'un axe 3, lequel peut tourillonner, par exemple sur le châssis du filtre.

Le levier 1 est muni d'un récepteur 4, placé sous les bandes filtrantes A, qui recueille les boues fluant latéralement des bandes presseuses.

La largeur du plateau est telle que, une fois placé sous les bandes, il puisse recueillir la boue fluant par l'un des côtés de ces bandes.

Suivant l'invention, le plateau 4 est incliné sur l'horizontale et constitué avantageusement par une tôle perforée ou une grille. Ces dispositions permettent d'évacuer un écoulement du filtrat sur le plateau, écoulement qui perturberait la détection d'accumulation des boues fluées.

Le levier antagoniste 2 est muni d'une ou plusieurs masses 5, de position variable le long du levier, et il présente à son extrémité des moyens, représentés schématiquement en 6, coopérant avec des moyens fixes 7, connus en eux-mêmes, pour la détection du basculement se produisant sous la surcharge imposée au plateau récepteur 4 et le déclenchement d'un signal à diverses possibilités, comme on le verra en décrivant le fonctionnement de l'appareil.

En outre, un système de lavage du plateau récepteur 4 à l'aide d'un gicleur à jet plat 8, alimenté par un piquage sur la conduite d'eau de lavage du filtre à bandes lui-même, ou toute autre source d'eau claire, par l'intermédiaire d'une électrovanne (non représentée), couplé au système de détection de basculement 6, envoie un jet d'eau de rinçage sur le plateau 4 pendant un temps, préalablement fixé par minuterie ou tout autre moyen, afin de débarrasser le plateau de sa surcharge en boue fluée, et donc de permettre au système de revenir à sa position d'équilibre.

Le produit du lavage est recueilli dans une goulotte 9, et évacué en 10.

L'appareil suivant l'invention fonctionne de la façon suivante :

L'appareil est disposé sur le châssis du filtre, au niveau où se produit généralement le fluage, et le plateau 4 est situé sous les bandes, sa position et sa largeur étant choisies de façon à ce qu'il puisse recueillir la boue fluant latéralement d'un côté de ces bandes. Les boues fluées se déposent sur ce plateau, créant une surcharge qui entraîne le basculement de l'ensemble du système, ce basculement excitant alors le système de détection 6, 7. Un signal est alors envoyé à l'armoire de commande du filtre et déclenche, soit une alarme visuelle ou sonore, soit un arrêt total de l'ensemble de l'installation jusqu'à intervention du conducteur de l'installation, soit à la fois l'alarme et l'arrêt. Ce signal peut également être pris en compte par un automate programmable, qui agit sur la marche du filtre. Ce signal déclenche également le lavage du plateau, par ouverture de l'électrovanne d'eau de lavage. Le plateau, libéré de sa surcharge de boues, revient à sa position d'équilibre, et le système est ainsi prêt à détecter un nouveau fluage.

Il demeure bien entendu que l'invention n'est pas limitée à la forme de réalisation décrite et représentée, mais qu'elle peut, sans pour autant s'écarter de son cadre, en englober toutes les variantes.

## Revendications

1. Appareil pour la détection automatique du fluage des boues en cours de déshydratation sur filtres à bandes presseuses, caractérisé en ce qu'il consiste en une bascule placée à l'endroit voulu sous les bandes, dont l'un des leviers (1) comporte un plateau (4) destiné à recevoir la boue, l'autre levier (2) comportant des moyens (6) destinés, lors d'une surcharge du plateau récepteur (4) entraînant un basculement du système, à déclencher un signal d'alerte ou d'arrêt du filtre.

2. Appareil suivant la revendication 1, caractérisé en ce que le plateau récepteur (4) présente une largeur telle qu'une fois en position sous les bandes, il puisse recueillir la boue fluant par l'un des côtés des bandes.

3. Appareil suivant l'une quelconque des revendications précédentes, caractérisé en ce que le plateau récepteur (4), dont les bords sont relevés, présente un fond perforé et incliné pour assurer l'écoulement du filtrat tombé sur le plateau.

4. Appareil suivant l'une quelconque des revendications précédentes, caractérisé en ce que le levier (2) antagoniste au levier (1) portant le plateau récepteur (4) est taré au moyen d'une ou plusieurs masses (5), de position variable sur le levier.

5. Appareil suivant l'une quelconque des revendication précédentes, caractérisé en ce que le plateau récepteur (4) est lavé automatiquement après chaque basculement, afin de le débarrasser des boues qui s'y trouvent et de le rendre apte à détecter un fluage ultérieur.

6. Appareil suivant l'une quelconque des revendications précédentes, caractérisé en ce qu'il est couplé à un dispositif d'alarme, avec ou sans arrêt total du filtre, et éventuellement intégré à un ensemble de dispositifs de détection permettant l'automatisation complète de l'atelier de traitement de boues.

## Patentansprüche

1. Gerät zum automatischen Feststellen des Fließens von Schlämmen im Verlaufe der Entwässerung auf Preßbandfiltern, dadurch gekennzeichnet, daß das Gerät aus eine an einer gewünschten Stelle unter den Bändern angeordnete Kippvorrichtung umfaßt, deren einer Hebel (1) eine zur Aufnahme von Schlamm bestimmte Platte (4) aufweist und deren anderer Hebel (2) eine Vorrichtung (6) aufweist, die dazu bestimmt ist, bei einer ein Kippen des Systems hervorrufenden Überlastung der Aufnahmeplatte (4) ein Alarmsignal auszulösen oder den Filter anzuhalten.

2. Gerät gemäß Anspruch 1, dadurch gekennzeichnet, daß die Aufnahmeplatte (4) derart breit bemessen ist, daß sie, wenn sie einmal unter den Bändern in Position gebracht wurde, den von einer der Seiten der Bänder herunterfließenden Schlamm auffangen kann.

3. Gerät nach einem der vorhergehenden Ansprüche, dadurch gekennzeichnet, daß die Aufnahmeplatte (4), deren Ränder erhöht sind, einen perforierten Boden aufweist und derart geneigt ist, daß das Abfließen des auf die Platte fallenden Filtrats sichergestellt ist.

4. Gerät nach einem der vorhergehenden Ansprüche, **dadurch gekennzeichnet, daß** der Gegenhebel (2) des die Aufnahmeplatte (4) tragenden Hebels (1) mittels eines oder mehrerer Gewichte (5), die in ihrer Position auf dem Hebel veränderbar sind, austarierbar ist.

5. Gerät nach einem der vorhergehenden Ansprüche, **dadurch gekennzeichnet, daß** die Aufnahmeplatte (4) automatisch nach jedem Kippvorgang gewaschen wird, um sie von den darauf befindlichen Schlämmen zu befreien und zu ermöglichen, daß auch ein späterer Schlammfluß festgestellbar ist.

6. Gerät nach einem der vorhergehenden Ansprüche, **dadurch gekennzeichnet, daß** es an eine Alarmvorrichtung angeschlossen ist, ein- oder ausschließlich eines totalen Anhaltens des Filters, und daß es möglicherweise in ein System von Detektorvorrichtungen integriert ist, welches eine vollständige Automatisierung einer Schlammbehandlungsanlage erlaubt.

**Claims**

1. Apparatus for the automatic detection of the flow of sludge during dehydration on pressing belt filters, characterized in that it consists of a rocking member placed at the desired location beneath the belts, whereof one of the levers (1) has a plate (4) for receiving the sludge, the other lever (2) having means (6) which, during an overloading of the receiving plate (4) leading to the tilting of the system, release a filter stopping or alarm signal.

2. Apparatus according to claim 1, characterized in that the receiving plate (4) has a width such that when in position beneath the belts, it is able to collect the sludge flowing over one of the sides of the belts.

3. Apparatus according to any one of the preceding claims, characterized in that the receiving plate (4), whose edges are raised, has an inclined, perforated bottom so as to ensure the outflow of the filtrate which has dropped onto the plate.

4. Apparatus according to any one of the preceding claims, characterized in that the lever (2) opposing the lever (1) carrying the receiving plate (4) is calibrated by means of one or more weights (5) having a variable position on the lever.

5. Apparatus according to any one of the preceding claims, characterized in that the receiving plate (4) is automatically washed after each tilting action, in order to remove therefrom the sludge located thereon and in such a way that it can detect a subsequent flow.

6. Apparatus according to any one of the preceding claims, characterized in that it is coupled to an alarm device with or without the total stoppage of the filter and is optionally integrated into a system of detection devices permitting the complete automation of the sludge treatment installation.

Fig.1

EP 0 298 789 B1

Fig. 2

EP 0 298 789 B1